# EUROPEAN PATENT SPECIFICATION

(11) **EP 2 534 544 B1**
(45) Date of publication and mention of the grant of the patent: **08.04.2020**
(21) Application number: 10844984.4
(22) Date of filing: 08.02.2010
(51) Int. Cl.: G05B 19/05

(54) **METHOD AND APPARATUS FOR MAINTAINING NETWORK COMMUNICATION DURING MAINTENANCE**
VERFAHREN UND VORRICHTUNG ZUR AUFRECHTERHALTUNG DER NETZWERKKOMMUNIKATION WÄHREND EINER WARTUNG
PROCÉDÉ ET APPAREIL PERMETTANT DE CONSERVER UNE COMMUNICATION DE RÉSEAU PENDANT UNE MAINTENANCE

(43) Date of publication of application: 19.12.2012
(73) Proprietor: GE Intelligent Platforms, Inc., Charlottesville, VA 22911 (US)
(72) Inventor: ELLIOT, David, Charlottesville, VA 22906 (US); ZHANG, Yu, Shanghai 201209 (CN); HALTERMAN, Darrell, Charlottesville, VA 22911-8300 (US); XU, Li, Pudong Shanghai 201203 (CN); SHANG, Weihua, Shanghai 201203 (CN); WANG, Haifeng, Shanghai 201203 (CN)
(74) Representative: Ligi, Stefano
(86) International application number: PCT/CN2010/000167
(87) International publication number: WO 2011/094899

(56) References cited:
- WO-A2-2006/023567
- CN-A- 101 034 380
- CN-A- 101 408 765
- US-A- 5 099 449
- US-A1- 2003 070 066

## Description

### BACKGROUND

The embodiments described herein relate generally to programmable logic controller (PLC) networks and, more particularly, to input/output (I/O) scanners for use with PLC networks.

US 2003/0070066 A1 discloses a system for providing notification to an associated operating system of removal and replacement of I/O devices.

At least some known I/O scanners include one or more I/O modules that are coupled to a backplane for transmitting and receiving data. Moreover, at least some known I/O scanners include a network interface that communicates with other network points, such as one or more PLCs. However, in order to service the I/O modules and/or the backplane of at least some known I/O scanners, a user must power down the I/O scanner, which results in a loss of network connectivity. If such an I/O scanner is part of a network that is a line topology or a ring topology, loss of network connectivity negatively impacts network performance across the entire network.

### BRIEF DESCRIPTION

The present invention is defined in the accompanying claims.

In one embodiment, a communication method is provided for use by an input/output (I/O) scanner that is coupled to a programmable logic controller (PLC). The communication method includes coupling at least one I/O module to a backplane, and coupling maintenance module to the backplane. The communication method also includes selectively enabling and disabling communication between the backplane and the at least one I/O module by actuating a switch in the maintenance module such that network communication is maintained by a network interface regardless of whether communication between the backplane and the at least one I/O module is enabled.

In another embodiment, an input/output (I/O) scanner is provided, including at least one I/O module, a backplane configured to couple to the at least one I/O module, and a maintenance module configured to selectively enable and disable communication between the backplane and the at least one I/O module via a switch in the maintenance module.

In another embodiment, an input/output (I/O) scanner is provided for use with a programmable logic controller (PLC) network. The I/O scanner includes a power supply, at least one I/O module, and a backplane configured to coupled to the at least one I/O module. The I/O scanner also includes a switch configured to selectively enable and disable communication between the backplane and the at least one I/O module, and at least one power circuit coupled to the power supply and the backplane, wherein the at least one power circuit is configured to control current flow between the power supply and the backplane based on whether communication between the backplane and the at least one I/O module is enabled or disabled.

### BRIEF DESCRIPTION OF THE DRAWINGS

The embodiments described herein may be better understood by referring to the following description in conjunction with the accompanying drawings.
FIG. 1 is a schematic block diagram of an exemplary programmable logic controller (PLC) network.
FIG. 2 is a schematic block diagram of an exemplary electrical architecture of an input/output (I/O) scanner that may be used with the PLC network shown in FIG. 1.
FIG. 3 is a schematic block diagram of an exemplary electrical architecture of a maintenance module that may be used with the I/O scanner shown in FIG. 2.
FIG. 4 is a flowchart that illustrates an exemplary communication method for use by the I/O scanner shown in FIG. 2.

### DETAILED DESCRIPTION

Exemplary embodiments of methods and apparatus for use in maintaining network communications by an input/output (I/O) scanner while in a maintenance mode that enables service of a PLC backplane and/or one or more I/O modules coupled to the backplane are described hereinabove. The embodiments described herein facilitate maintaining a network topology, such as a line topology or ring topology, when one or more nodes or I/O scanners are in a maintenance mode.

Exemplary technical effects of the methods and apparatus described herein include at least one of: (a) actuating a switch for a preselected time period; (b) in response to the actuation, selectively enabling and disabling communications between a backplane and one or more input/output (I/O) modules, and power supplied to the backplane by a power supply; and (c) maintaining communication ability with a network via a network interface regardless of whether communication between the backplane and I/O modules is enabled or disabled.

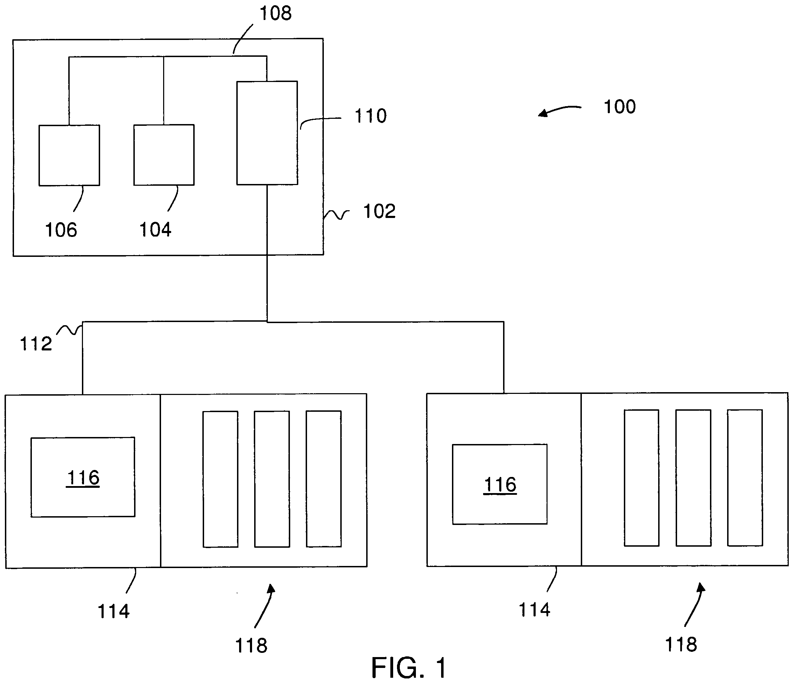

FIG. 1 is a schematic block diagram of an exemplary programmable logic controller (PLC) network 100 for use in, for example, an automation system. However, it should be understood that PLC network 100 may be used in any suitable system.

In the exemplary embodiment, PLC network 100 includes at least one PLC 102, which includes a processor 104 and a memory 106 coupled to processor 104 via a system bus 108. In alternative embodiments, PLC 102 may include multiple processors 104 and/or multiple memories 106. In the exemplary embodiment, PLC 102 also includes a network interface 110 that is coupled to system bus 108. Network interface 110 couples PLC 102 to a network 112, such as an automation network, to facilitate transmitting communication messages to other network nodes (not shown). Network 112 may be any suitable type of network including, but not limited to only including, an Ethernet network, an IEEE 802.11 wireless network, a reflective memory network, and a powerline network. Accordingly, network interface 110 may be any suitable type of network interface that facilitates transmitting communication messages via the selected network 112.

In the exemplary embodiment, PLC network 100 also includes one or more input/output (I/O) scanners 114. Each I/O scanner 114 includes a maintenance module 116 and one or more I/O modules 118 that receive data (input) from any suitable data source and transmit data (output) to any suitable data destination.

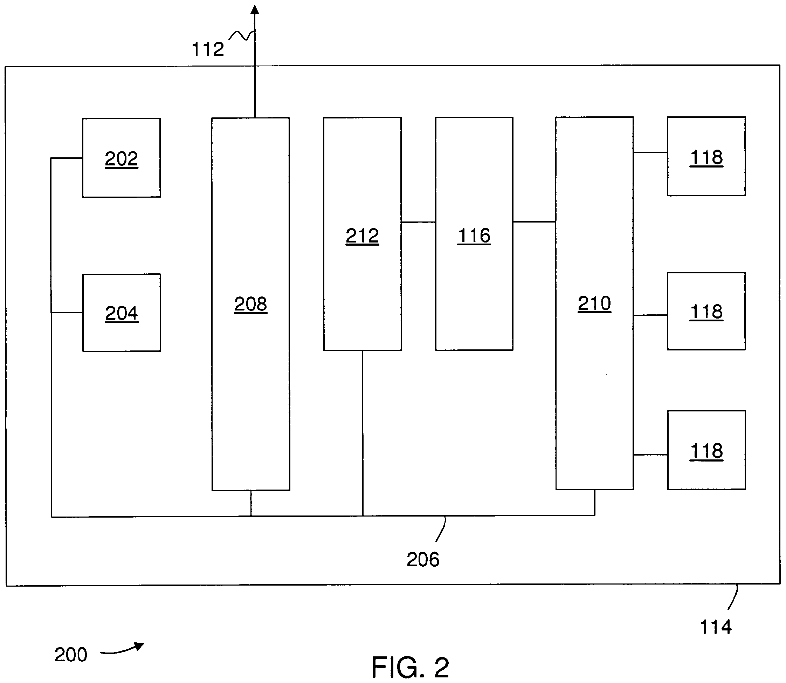

FIG. 2 is a schematic block diagram of an exemplary electrical architecture 200 of I/O scanner 114. In the exemplary embodiment, I/O scanner 114 includes a processor 202 and a memory 204 coupled to processor 202 via a system bus 206. In alternative embodiments, I/O scanner 114 may include multiple processors 202 and/or multiple memories 204. In the exemplary embodiment, I/O scanner 114 also includes a network interface 208 that is coupled to system bus 206. Network interface 208 couples I/O scanner 114 to network 112 to facilitate transmitting communication messages to, for example, PLC 102 (shown in FIG. 1). In an alternative embodiment, I/O scanner 114 includes multiple and/or redundant network interfaces 208.

Moreover, in the exemplary embodiment, each I/O module 118 is coupled to a backplane 210 that is also coupled to processor 202 and memory 204 via system bus 206. Backplane 210 transmits and receives data between processor 202 and I/O modules 118. Moreover, each I/O module 118 receives power from a power supply 212 via backplane 210. During operation, I/O scanner 114 scans, such as periodically scans, I/O modules 118 to transmit and/or receive data via backplane 210. In alternative embodiments, backplane 210 and/or I/O modules 118 are not components of I/O scanner 114. Rather, in such embodiments, backplane 210 and/or I/O modules 118 are externally coupled to I/O scanner 114.

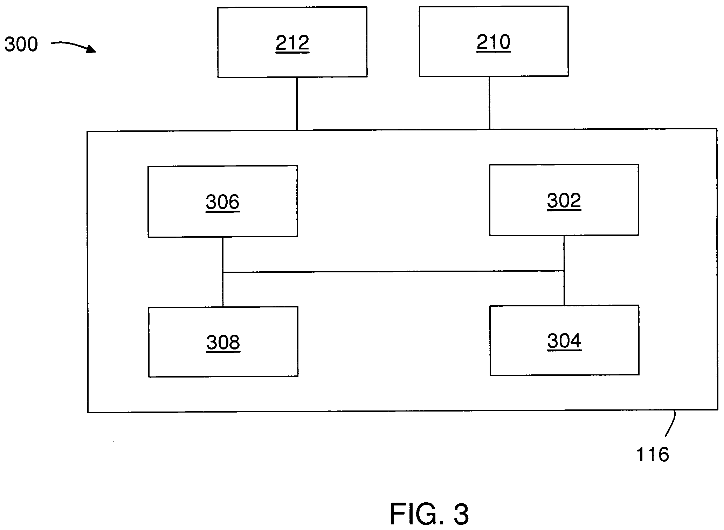

FIG. 3 is a schematic block diagram of an exemplary electrical architecture 300 of maintenance module 116. In the exemplary embodiment, maintenance module 116 selectively enables and disables communication and power to backplane 210 and/or I/O modules 118 (shown in FIGs. 1 and 2) to facilitate providing access to I/O modules 118 while I/O scanner 114 (shown in FIGs. 1 and 2) continues to receive and transmit network traffic via network interface 208 (shown in FIG. 2).

In the exemplary embodiment, maintenance module 116 includes a user-actuated switch 302 that selectively enables and disables communication and power to backplane 210 and I/O modules 118. In the exemplary embodiment, switch 302 is a pushbutton switch. However, switch 302 may be any suitable type of user-actuated device including, but not limited to only including, a toggle switch, a rotary switch, a rocker switch, and a touch sensitive switch. Switch 302 is used to transition I/O scanner 114 from an operating mode into a maintenance mode, thereby disabling communication and power to backplane 210 and I/O modules 118. Moreover, switch 302 is used to transition I/O scanner 114 from the maintenance mode into the operating mode, thereby enabling communication and power to backplane 210 and I/O modules 118. In the exemplary embodiment, switch 302 is positioned behind a door or cover (not shown) in a housing (not shown) of I/O scanner 114 to prevent accidental actuation. Moreover, in the exemplary embodiment, switch 302 is positioned within a recessed faceplate (not shown) that is located beneath the door or cover to prevent accidental operation.

Moreover, in the exemplary embodiment, maintenance module 116 includes a light device 304 that indicates a position of switch 302. More specifically, light device 304 indicates whether I/O scanner 114 is in the operating mode or the maintenance mode based on a position of switch 302. In the exemplary embodiment, light device 304 is a light emitting diode (LED). However, light device 304 may be any suitable type of device that emits one or more light colors or light intensities to indicate the position of switch 302. Maintenance module 116 also includes one or more power circuits 306 that are coupled to power supply 210 and to backplane 210. Power circuit 306 controls current flow between power supply 212 and backplane 210 when maintenance module 116 transitions between operating mode and maintenance mode to protect power supply 212 from the need to provide more power to backplane 210 than power supply 212 is capable of providing.

In the exemplary embodiment, maintenance module 116 also includes a microprocessor 308 that determines a time period that switch 302 is actuated. Microprocessor 308 compares, such as periodically compares, the time period to a preselected time period. If switch 302 has been actuated for a time period that is equal to or greater than the preselected time period, maintenance module 116 transitions operating state. For example, if maintenance module 116 begins in an operating mode and switch 302 is actuated for the preselected time period, such as three seconds, maintenance module 116 transitions to a maintenance mode, and disables communication and power to backplane 210 and I/O modules 118. Moreover, maintenance module 116 tri-states communications between I/O modules 118 and backplane 210. In an alternative embodiment, wherein switch 302 is, for example, a toggle switch or a sliding switch, maintenance module 116 transitions operating state based only on the position of switch 302. For example, if switch 302 is in a first position and is moved to a second position, maintenance module 116 transitions from operating mode to maintenance mode. Similarly, if switch 302 is moved from the second position to the first position, maintenance module 116 transitions from maintenance mode to operating mode.

Similarly, if maintenance module 116 begins in the maintenance mode and switch 302 is actuated for the preselected time period, such as three seconds, maintenance module 116 transitions to the operating mode, and enables communication and power to backplane 210 and I/O modules 118. Moreover, when switch 302 has been actuated for the preselected time period, microprocessor 308 transmits a signal to light device 304. In response to the signal, light device 304 indicates a change in operating status. For example, light device 304 does not emit light when maintenance module 116 is in the operating mode. In contrast, light device 304 emits a steady light when maintenance module 116 is in the maintenance mode. Alternatively, light device 304 may be periodically illuminated when maintenance module 116 is in the maintenance mode. In some embodiments, maintenance module 116 will not change the operating state until a preselected amount of time, such as one half second, after switch 302 is released. Moreover, in some embodiments, a single actuation of switch 302 will not change the operating state more than once.

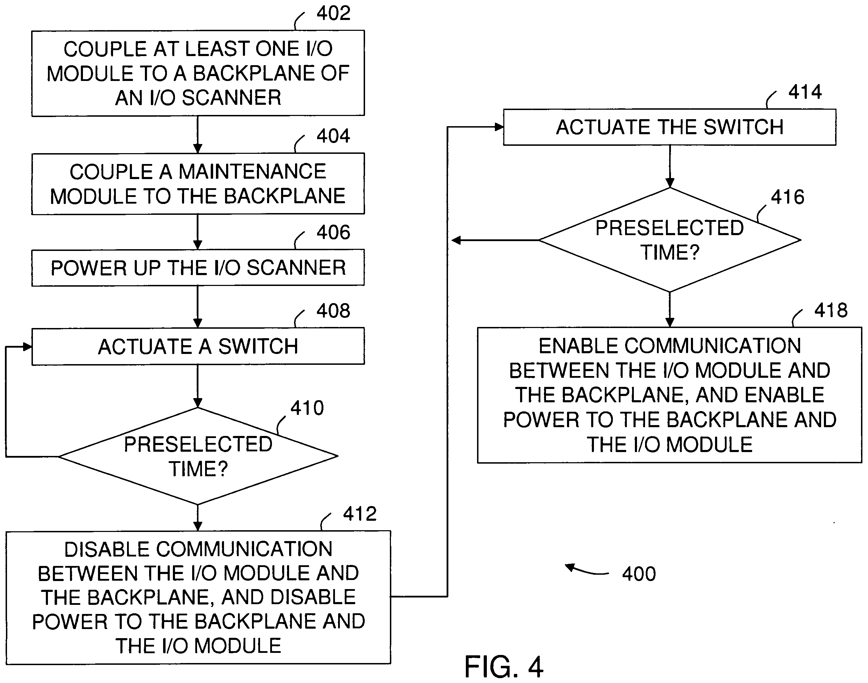

FIG. 4 is a flowchart 400 that illustrates an exemplary communication method for use by an I/O scanner, such as I/O scanner (shown in FIG. 2). In the exemplary embodiment, one or more I/O modules 118 are coupled 402 to backplane 210 (both shown in FIG. 2). In addition, maintenance module 116 (shown in FIG. 2) is coupled 404 to backplane 210 and to power supply 212 (shown in FIG. 2). More specifically, one or more power circuits 306 (shown in FIG. 3) are coupled to power supply 212 and backplane 210, and switch 302 (shown in FIG. 3) is coupled to backplane 210.

In the exemplary embodiment, and when received from the factory, I/O scanner 114 powers up 406 in an operating mode, wherein power supply 212 supplies power to backplane 212 to enable I/O scanner 114 to scan, such as periodically scan, for data from I/O modules 118. Moreover, when in the operating mode, light device 304 (shown in FIG. 3) is in a first state, such as an OFF state.

During operation, a user actuates switch 302 to selectively enable and disable communications between backplane 210 and I/O modules 118, and power supplied by power supply 212 to backplane 210 and I/O modules 118. Specifically, a user actuates 408 switch 302 for a preselected time period to transition maintenance module 116 (shown in FIG. 2) into a maintenance mode. Microprocessor 308 (shown in FIG. 3) determines a time period of actuation and compares 410 the time period to the preselected time period. When transitioning to the maintenance mode, maintenance modules 116 disables 412, or ceases, the power supplied to backplane 210 and I/O modules 118 by power supply 212. Moreover, maintenance module 116 disables 412 communication between backplane 210 and I/O modules 118. More specifically, maintenance module 116 tri-states communications between I/O modules 118 and backplane 114. Moreover, light device 304 indicates that I/O scanner 114 is in maintenance mode via, for example, a steady-state light or a blinking light. When in maintenance mode, I/O modules 118 may be serviced and/or replaced and backplane 210 may be serviced. Moreover, when in maintenance mode, I/O scanner 114 maintains a connection to network 112 (shown in FIG. 1) via network interface 208 (shown in FIG. 2).

Upon completion of any service tasks, the user again actuates 414 switch 302 for the preselected time period to transition maintenance module 116 into the operating mode. Microprocessor 308 determines a time period of actuation and compares 416 the time period to the preselected time period. When transitioning to the operating mode, maintenance module 116 enables 418 communication between backplane 210 and I/O modules 118. Moreover, maintenance modules 116 enables 418 the power supplied to backplane 210 and I/O modules 118 by power supply 212. Moreover, light device 304 indicates that I/O scanner 114 is in the operating mode.

In the exemplary embodiment, when I/O scanner 114 is in the maintenance mode, PLC 102 (shown in FIG. 1) attempts, such as repeatedly or periodically attempts, to reconnect to any removed or powered-down I/O modules 118. When I/O scanner 114 transitions into the operating mode, PLC 102 is again successfully to connect to recently-serviced or new I/O modules 118, and will reconfigure such I/O modules 118. In an alternative embodiment, when maintenance module 116 transitions into the operating mode from the maintenance mode, any newly added I/O modules 118 will not be configured by I/O scanner 114 using a previously-used configuration file. Rather, I/O scanner 114 will establish a new application relationship with the newly added I/O modules 118, and will configure the newly added I/O modules 118 based on the new application relationship.

Moreover, in the exemplary embodiment, maintenance module 116 retains the current mode across power cycles. For example, if I/O scanner 114 loses power while maintenance module 116 is in maintenance mode, I/O scanner 114 will power up with maintenance module 116 in maintenance mode. Similarly, if I/O scanner 114 loses power while maintenance module 116 is in the operating mode, I/O scanner 114 will power up with maintenance module 116 in the operating mode.

Exemplary embodiments of methods and apparatus for use in maintaining network communications while in a maintenance mode are described above in detail. The methods and apparatus are not limited to the specific embodiments described herein but, rather, operations of the methods and/or components of the system and/or apparatus may be utilized independently and separately from other operations and/or components described herein. Further, the described operations and/or components may also be defined in, or used in combination with, other systems, methods, and/or apparatus, and are not limited to practice with only the systems, methods, and storage media as described herein.

A PLC or controller, such as those described herein, includes at least one processor or processing unit and a system memory. The PLC or controller typically has at least some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Combinations of any of the above are also included within the scope of computer readable media.

Although the present invention is described in connection with an exemplary automation system environment, embodiments of the invention are operational with numerous other general purpose or special purpose automation system environments or configurations. The automation system environment is not intended to suggest any limitation as to the scope of use or functionality of any aspect of the invention. Moreover, the automation system environment should not be interpreted as having any dependency or requirement relating to any one or combination of components illustrated in the exemplary operating environment. Examples of well known automation systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program components or modules, executed by one or more computers or other devices. Aspects of the invention may be implemented with any number and organization of components or modules. For example, aspects of the invention are not limited to the specific computer-executable instructions or the specific components or modules illustrated in the figures and described herein. Alternative embodiments of the invention may include different computer-executable instructions or components having more or less functionality than illustrated and described herein.

The order of execution or performance of the operations in the embodiments of the invention illustrated and described herein is not essential, unless otherwise specified.

That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

In some embodiments, the term "processor" and/or the term "microprocessor" refers generally to any programmable system including systems and microcontrollers, reduced instruction set computers (RISC), application specific integrated circuits (ASIC), field-programmable gate arrays (FPGA), and any other circuit, processor, or controller capable of executing the functions described herein. The above examples are exemplary only, and thus are not intended to limit in any way the definition and/or meaning of the term "processor" and/or the term "microprocessor."

In some embodiments, the term "memory" refers generally to any computer memory module including random access memory (RAM), read only memory (ROM), disc-based hard drives, solid state drives (SSD), removable memory cards, and any other device capable of storing the information described herein. The above examples are exemplary only, and thus are not intended to limit in any way the definition and/or meaning of the term "memory."

When introducing elements of aspects of the invention or embodiments thereof, the articles "a," "an," "the," and "said" are intended to mean that there are one or more of the elements. The terms "comprising," including," and "having" are intended to be inclusive and mean that there may be additional elements other than the listed elements.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**PARTS LIST**

| | |
|---|---|
| 100 | PLC network |
| 102 | PLC |
| 104 | Processor |
| 106 | Memory |
| 108 | System bus |
| 110 | Network interface |
| 112 | Network |
| 114 | I/O scanner |
| 116 | Maintenance module |
| 118 | I/O module |
| 200 | Electrical architecture |
| 202 | Processor |
| 204 | Memory |
| 206 | System bus |
| 208 | Network interface |
| 210 | Backplane |
| 212 | Power supply |
| 300 | Electrical architecture |
| 302 | Switch |
| 304 | Light device |
| 306 | Power circuits |
| 308 | Microprocessor |
| 400 | Flowchart |
| 402 | Couple at least one I/O module to a backplane of an I/O scanner |
| 404 | Couple a maintenance module to the backplane |
| 406 | Power up the I/O scanner |
| 408 | Actuate a switch |
| 410 | Determine whether the switch is actuated for a predetermined time |
| 412 | Disable communication between the I/O module and the backplane, and disable power to the backplane and the I/O module |
| 414 | Actuate the switch |
| 416 | Determine whether the switch is actuated for a predetermined time |
| 318 | Enable communication between the I/O module and the backplane, and enable power to the backplane and the I/O module |

## Claims

1. A communication method for use by an input/output (I/O) scanner coupled to at least one programmable logic controller (PLC), said communication method comprising:
coupling at least one I/O module (118) to a backplane (210);
coupling a maintenance module (116) to the backplane (210); and
selectively enabling and disabling communication between the backplane (210) and the at least one I/O module (118) by actuating a switch (302) in the maintenance module (116) such that network communication is maintained by a network interface (110) regardless of whether communication between the backplane (210) and the at least one I/O module (118) is enabled;
**characterised in that** disabling communication between the backplane (210) and the at least one I/O module (118) comprises:
removing power from the backplane (210), by the I/O scanner (114); and
tri-stating communication signals between the I/O scanner (114) and the backplane (210).

2. A communication method in accordance with Claim 1, wherein enabling communication between the backplane and the at least one I/O module comprises:
supplying power to the backplane (210), by the I/O scanner (114); and
scanning the at least one I/O module (118), by the I/O scanner (114).

3. A communication method in accordance with Claim 1 or Claim 2, wherein the I/O scanner (114) includes a light device (304), said communication method further comprising using the light device (304) to indicate whether communication between the backplane (210) and the at least one I/O module (118) is enabled.

4. A communication method in accordance with any one of Claims 1 to 3, wherein the I/O scanner (114) includes a switch and a microprocessor, said selectively enabling and disabling communication comprises using the microprocessor to determine a time period during which the switch is actuated into one of a first position associated with enabled communication and a second position associated with disabled communication.

5. A communication method in accordance with any one of Claims 1 to 4, wherein said selectively enabling and disabling communication comprises:
enabling communication between the backplane (210) and the at least one I/O module (118) at a first position; and
disabling communication between the backplane (210) and the at least one I/O module (118) at a second position.

6. A communication method in accordance with any one of Claims 1 to 5, wherein the I/O scanner (114) includes a power supply (212) and at least one power circuit (306) coupled to the power supply and the backplane (210), said communication method further comprising using the power circuit to control current flow between the power supply and the backplane when communication between the backplane (210) and the at least one I/O module (118) is enabled.

7. An input/output (I/O) scanner comprising:
at least one I/O module (118);
a backplane (210) configured to couple to said at least one I/O module (118); and
a maintenance module (116) configured to selectively enable and disable communication between said backplane (210) and said at least one I/O module (118) via a switch (302) in the maintenance module (116); **characterised in that**
disabling communication between the backplane (210) and the at least one I/O module (118) comprises:
removing power from the backplane (210), by the I/O scanner (114); and
tri-stating communication signals between the I/O scanner (114) and the backplane (210).

8. An input/output (I/O) scanner in accordance with Claim 7, wherein when communication between said backplane (210) and said at least one I/O module (118) is enabled by said maintenance module (116), said I/O scanner is configured to supply power to said backplane (210) and scan said at least one I/O module (118) for I/O data, and wherein when communication between said backplane (210) and said at least one I/O module (118) is disabled by said maintenance module (116), said I/O scanner is configured to cease power supply to said backplane (210) and tri-state communication signals betweens said at least one I/O module (118) and said backplane (210).

9. An input/output (I/O) scanner in accordance with Claim 7 or Claim 8, further comprising a network interface configured to maintain communication with a network regardless of whether communication between said backplane (210) and said at least one I/O module (118) is enabled or disabled by said maintenance module (116).

10. An input/output (I/O) scanner in accordance with Claim 7, 8 or 9, wherein said maintenance module (116) comprises a switch configured to:
enable communication between said backplane (210) and said at least one I/O module (118) at a first position; and
disable communication between said backplane (210) and said at least one I/O module (118) at a second position.

11. An input/output (I/O) scanner in accordance with Claim 10, wherein said maintenance module (116) further comprises a microprocessor (308) coupled to said switch (302), said microprocessor configured to determine a time period during which said switch is actuated.

12. An input/output (I/O) scanner in accordance with Claim 11, wherein said maintenance module (110) is configured to:
disable communication between said backplane (210) and said at least one I/O module (118) in response to an actuation of said switch for a preselected period of time; and
enable communication between said backplane (210) and said at least one I/O module (118) in response to an actuation of said switch for a preselected period of time.

13. An input/output (I/O) scanner in accordance with any one of Claims 7 to 12, wherein said maintenance module (116) comprises a light device (304) configured to indicate whether communication between said backplane (210) and said at least one I/O module (118) is enabled or disabled.

14. An input/output (I/O) scanner in accordance with any one of Claims 7 to 13, further comprising a power supply, said maintenance module (116) further comprising at least one power circuit coupled to said power supply and to said backplane (210), said at least one power circuit configured to control current flow between said power supply and said backplane when communication between said backplane (210) and said at least one I/O module (118) is enabled.

15. An input/output (I/O) scanner for use with a programmable logic controller (PLC) network, said I/O scanner comprising:
a power supply;
an input/output scanner (114) in accordance with any one of Claims 7 to 14; and
at least one power circuit coupled to said power supply and said backplane (210), said at least one power circuit configured to control current flow between said power supply and said backplane (210) based on whether communication between said backplane and said at least one I/O module (118) is enabled or disabled.

## Patentansprüche

1. Ein Kommunikationsverfahren zur Verwendung durch eine Eingabe/Ausgabe-(I/O-)Abtasteinrichtung, welche mit mindestens einer Programmierbare-Logik-Steuerung (PLC) verbunden ist, wobei das Kommunikationsverfahren aufweist:
Verbinden des mindestens einen I/O-Moduls (118) mit einer Rückwandplatine (210),
Verbinden eines Wartungsmoduls (116) mit der Rückwandplatine (210),
selektives Aktivieren oder Deaktivieren einer Kommunikation zwischen der Rückwandplatine (210) und dem mindestens einen I/O-Modul (118) durch Betätigen eines Schalters (302) in dem Wartungsmodul (116), so dass eine Netzwerkkommunikation mit einer Netzwerkschnittstelle (110) aufrechterhalten wird, ungeachtet davon, ob eine Kommunikation zwischen der Rückwandplatine (210) und dem mindestens einen I/O-Modul (118) aktiviert ist,
**gekennzeichnet dadurch, dass**
das Deaktivieren der Kommunikation zwischen der Rückwandplatine (210) und dem mindestens einen I/O-Modul (118) aufweist:
Wegnehmen der Energie von der Rückwandplatine (210) durch die I/O-Abtasteinrichtung (114), und
Tri-Stating von Kommunikationssignalen zwischen der I/O-Abtasteinrichtung (114).

2. Ein Kommunikationsverfahren gemäß Anspruch 1, wobei ein Aktivieren der Kommunikation zwischen der Rückwandplatine und dem mindestens einen I/O-Modul aufweist:
Liefern von Energie an die Rückwandplatine (210) durch die I/O-Abtasteinrichtung (114), und
Abtasten des mindestens einen I/O-Moduls (118) durch die I/O-Abtasteinrichtung (114).

3. Ein Kommunikationsverfahren gemäß Anspruch 1 oder Anspruch 2, wobei die I/O-Abtasteinrichtung (114) eine Lichteinrichtung (304) aufweist, wobei das Kommunikationsverfahren ferner aufweist Verwenden der Lichteinrichtung (304) zum Angeben, ob eine Kommunikation zwischen der Rückwandplatine (210) und dem mindestens einen I/O-Modul (118) aktiviert ist.

4. Ein Kommunikationsverfahren gemäß irgendeinem der Ansprüche 1 bis 3, wobei die I/O-Abtasteinrichtung (114) einen Schalter und einen Mikroprozessor aufweist, wobei das selektive Aktivieren und Deaktivieren der Kommunikation aufweist Verwenden des Mikroprozessors zum Ermitteln einer Zeitdauer, während welcher der Schalter in eine von einer ersten Stellung, die mit einer aktivierten Kommunikation zusammenhängt, und einer zweiten Stellung, die mit einer deaktivierten Kommunikation zusammenhängt, geschaltet wird.

5. Ein Kommunikationsverfahren gemäß irgendeinem der Ansprüche 1 bis 4, wobei das selektive Aktivieren und Deaktivieren der Kommunikation aufweist:
Aktivieren einer Kommunikation zwischen der Rückwandplatine (210) und dem mindestens einen I/O-Modul (118) in einer ersten Stellung, und
Deaktivieren einer Kommunikation zwischen der Rückwandplatine (210) und dem mindestens einen I/O-Modul (118) in einer zweiten Stellung.

6. Ein Kommunikationsverfahren gemäß irgendeinem der Ansprüche 1 bis 5, wobei die I/O-Abtasteinrichtung (114) aufweist eine Energieversorgung (212) und mindestens einen Leistungskreis (306), welcher mit der Energieversorgung und der Rückwandplatine (210) verbunden ist, wobei das Kommunikationsverfahren ferner aufweist Verwenden des Leistungskreises zum Steuern des Stromflusses zwischen der Energieversorgung und der Rückwandplatine, wenn eine Kommunikation zwischen der Rückwandplatine (210) und dem mindestens einem I/O-Modul (118) aktiviert ist.

7. Eine Eingabe/Ausgabe-(I/O-)Abtasteinrichtung, aufweisend:
mindestens ein I/O-Modul (118),
eine Rückwandplatine (210), welche zum Anschluss an das mindestens eine I/O-Modul (118) eingerichtet ist, und
ein Wartungsmodul (116), welches dazu eingerichtet ist, eine Kommunikation zwischen der Rückwandplatine (210) und dem mindestens einen I/O-Modul (118) selektiv mittels eines Schalters (302) in dem Wartungsmodul (116) zu aktivieren oder zu deaktivieren, **gekennzeichnet dadurch, dass**
das Deaktivieren der Kommunikation zwischen der Rückwandplatine (210) und dem mindestens einen I/O-Modul (118) aufweist:
Wegnehmen der Energie von der Rückwandplatine (210) durch die I/O-Abtasteinrichtung (114), und
Tri-Stating von Kommunikationssignalen zwischen der I/O-Abtasteinrichtung (114).

8. Eine Eingabe/Ausgabe-(I/O-)Abtasteinrichtung gemäß Anspruch 7, wobei, wenn eine Kommunikation zwischen der Rückwandplatine (210) und dem mindestens einen I/O-Modul (118) durch das Wartungsmodul (116) aktiviert ist, die I/O-Abtasteinrichtung dazu eingerichtet ist, Energie an die Rückwandplatine (210) zu liefern und das mindestens eine I/O-Modul (118) für I/O-Daten abzutasten, und wobei, wenn eine Kommunikation zwischen der Rückwandplatine (210) und dem mindestens einen I/O-Modul (118) durch das Wartungsmodul (116) deaktiviert ist, die die I/O-Abtasteinrichtung dazu eingerichtet ist, die Energiezufuhr an die Rückwandplatine (210) einzustellen und Tri-Stating von Kommunikationssignalen zwischen der I/O-Abtasteinrichtung (114) durchzuführen.

9. Eine Eingabe/Ausgabe-(I/O-)Abtasteinrichtung gemäß Anspruch 7 oder Anspruch 8, ferner aufweisend eine Netzwerkschnittstelle, welche dazu eingerichtet ist, eine Kommunikation mit einem Netzwerk aufrechtzuerhalten, ungeachtet davon, ob eine Kommunikation zwischen der Rückwandplatine (210) und dem mindestens einen I/O-Modul (118) durch das Wartungsmodul (116) aktiviert oder deaktiviert ist.

10. Eine Eingabe/Ausgabe-(I/O-)Abtasteinrichtung gemäß Anspruch 7, 8 oder 9, wobei das Wartungsmodul (116) einen Schalter aufweist, der dazu eingerichtet ist:
eine Kommunikation zwischen der Rückwandplatine (210) und dem mindestens einen I/O-Modul (118) in einer ersten Stellung zu aktivieren, und
eine Kommunikation zwischen der Rückwandplatine (210) und dem mindestens einen I/O-Modul (118) in einer zweiten Stellung zu deaktivieren.

11. Eine Eingabe/Ausgabe-(I/O-)Abtasteinrichtung gemäß Anspruch 10, wobei das Wartungsmodul (116) ferner einen Mikroprozessor (308) aufweist, der mit dem Schalter (302) verbunden ist, wobei der Mikroprozessor dazu eingerichtet ist, eine Zeitdauer, während welcher der Schalter betätigt wird, zu ermitteln.

12. Eine Eingabe/Ausgabe-(I/O-)Abtasteinrichtung gemäß Anspruch 11, wobei das Wartungsmodul (116) dazu eingerichtet ist:
eine Kommunikation zwischen der Rückwandplatine (210) und dem mindestens einen I/O-Modul (118) zu deaktivieren in Reaktion auf eine Betätigung des Schalters für eine vorausgewählte Zeitdauer, und
eine Kommunikation zwischen der Rückwandplatine (210) und dem mindestens einen I/O-Modul (118) in einer zweiten Stellung zu aktivieren in Reaktion auf eine Betätigung des Schalters für eine vorausgewählte Zeitdauer.

13. Eine Eingabe/Ausgabe-(I/O-)Abtasteinrichtung gemäß irgendeinem der Ansprüche 7 bis 12, wobei das Wartungsmodul (116) eine Lichteinrichtung (304) aufweist, welche dazu eingerichtet ist, anzugeben, ob eine Kommunikation zwischen der Rückwandplatine (210) und dem mindestens einen I/O-Modul (118) aktiviert oder deaktiviert ist.

14. Eine Eingabe/Ausgabe-(I/O-)Abtasteinrichtung gemäß irgendeinem der Ansprüche 7 bis 13, ferner aufweisend eine Energieversorgung, wobei das Wartungsmodul (116) ferner mindestens einen Leistungskreis aufweist, welcher mit der Energieversorgung und der Rückwandplatine (210) verbunden ist, wobei der mindestens eine Leistungskreis dazu eingerichtet ist, den Stromfluss zwischen der Energieversorgung und der Rückwandplatine zu steuern, wenn eine Kommunikation zwischen der Rückwandplatine (210) und dem mindestens einem I/O-Modul (118) aktiviert ist.

15. Eine Eingabe/Ausgabe-(I/O-)Abtasteinrichtung zur Verwendung mit einem Programmierbare-Logik-Steuerung-(PLC-)Netzwerk, die I/O-Abtasteinrichtung aufweisend:
eine Energieversorgung,
eine Eingabe/Ausgabe-Abtasteinrichtung (114) gemäß irgendeinem der Ansprüche 7 bis 14,
und
mindestens einen Leistungskreis, welcher mit der Energieversorgung und der Rückwandplatine (210) verbunden ist, wobei der mindestens eine Leistungskreis dazu eingerichtet ist, den Stromfluss zwischen der Energieversorgung und der Rückwandplatine basierend darauf, ob eine Kommunikation zwischen der Rückwandplatine (210) und dem mindestens einem I/O-Modul (118) aktiviert oder deaktiviert ist, zu steuern.

## Revendications

1. Méthode de communication destinée à être utiliser par un scanner d'entrée/sortie (E/S) couplé à au moins un automate programmable industriel (PLC), ladite méthode de communication comprenant les étapes consistant à :
coupler au moins un module E/S (118) à un fond de panier (210) ;
coupler un module de maintenance (116) au fond de panier (210) ; et
activer et désactiver sélectivement une communication entre le fond de panier (210) et le au moins un module E/S (118) en actionnant un commutateur (302) dans le module de maintenance (116) de telle sorte qu'une communication de réseau soit maintenue par une interface réseau (110) indépendamment du fait qu'une communication entre le fond de panier (210) et le au moins un module E/S (118) soit activée ;
**caractérisée en ce qu'**une désactivation d'une communication entre le fond de panier (210) et le au moins un module E/S (118) comprend les étapes consistant à :
couper l'alimentation électrique du fond de panier (210), par l'intermédiaire du scanner E/S (114) ; et
donner trois états à des signaux de communication entre le scanner E/S (114) et le fond de panier (210).

2. Méthode de communication selon la revendication 1, dans laquelle une activation d'une communication entre le fond de panier et le au moins un module E/S comprend les étapes consistant à :
alimenter en puissance le fond de panier (210), par l'intermédiaire du scanner E/S (114) ; et
scanner le au moins un module E/S (118), par l'intermédiaire du scanner E/S (114).

3. Méthode de communication selon la revendication 1 ou la revendication 2, dans laquelle le scanner E/S (114) comprend un dispositif d'éclairage (304), ladite méthode de communication comprenant en outre l'utilisation du dispositif d'éclairage (304) pour indiquer si une communication entre le fond de panier (210) et le au moins un module E/S (118) est activée.

4. Méthode de communication selon l'une quelconque des revendications 1 à 3, dans laquelle le scanner E/S (114) comprend un commutateur et un microprocesseur, lesdites activation et désactivation sélectives d'une communication comprennent l'utilisation du microprocesseur pour déterminer une période de temps pendant laquelle le commutateur est actionné dans l'une d'une première position associée à une communication activée et d'une seconde position associée à une communication désactivée.

5. Méthode de communication selon l'une quelconque des revendications 1 à 4, dans laquelle lesdites activation et désactivation sélectives d'une communication comprend les étapes consistant à :
activer une communication entre le fond de panier (210) et le au moins un module E/S (118) dans une première position ; et
désactiver une communication entre le fond de panier (210) et le au moins un module E/S (118) dans une seconde position.

6. Méthode de communication selon l'une quelconque des revendications 1 à 5, dans laquelle le scanner E/S (114) comprend une alimentation électrique (212) et au moins un circuit d'alimentation électrique (306) couplé à l'alimentation électrique et au fond de panier (210), ladite méthode de communication comprenant en outre l'utilisation du circuit d'alimentation électrique pour commander un flux de courant entre l'alimentation électrique et le fond de panier lorsqu'une communication entre le fond de panier (210) et le au moins un module E/S (118) est activée.

7. Scanner d'entrée/sortie (E/S) comprenant :
au moins un module E/S (118) ;
un fond de panier (210) configuré pour être couplé audit au moins un module E/S (118) ; et
un module de maintenance (116) configuré pour activer et désactiver sélectivement une communication entre ledit fond de panier (210) et ledit au moins un module E/S (118) via un commutateur (302) dans le module de maintenance (116) ; **caractérisé en ce que** la désactivation d'une communication entre le fond de panier (210) et le au moins un module E/S (118) comprend les étapes consistant à :
couper l'alimentation électrique du fond de panier (210), par l'intermédiaire du scanner E/S (114) ; et
donner trois états à des signaux de communication entre le scanner E/S (114) et le fond de panier (210).

8. Scanner d'entrée/sortie (E/S) selon la revendication 7, dans lequel lorsqu'une communication entre ledit fond de panier (210) et ledit au moins un module E/S (118) est activée par ledit module de maintenance (116), ledit scanner E/S est configuré pour alimenter électriquement ledit fond de panier (210) et scanner ledit au moins un module E/S (118) pour des données E/S, et dans lequel lorsqu'une communication entre ledit fond de panier (210) et ledit au moins un module E/S (118) est désactivée par ledit module de maintenance (116), ledit scanner E/S est configuré pour interrompre l'alimentation électrique dudit fond de panier (210) et donner trois états à des signaux de communication entre ledit au moins un module E/S (118) et ledit fond de panier (210).

9. Scanner d'entrée/sortie (E/S) selon la revendication 7 ou la revendication 8, comprenant en outre une interface réseau configurée pour maintenir une communication avec un réseau indépendamment qu'une communication entre ledit fond de panier (210) et ledit au moins un module E/S (118) soit activée ou désactivée par ledit module de maintenance (116).

10. Scanner d'entrée/sortie (E/S) selon la revendication 7, 8 ou 9, dans lequel ledit module de maintenance (116) comprend un commutateur configuré pour :
activer une communication entre ledit fond de panier (210) et ledit au moins un module E/S (118) dans une première position ; et
désactiver une communication entre ledit fond de panier (210) et ledit au moins un module E/S (118) dans une seconde position.

11. Scanner d'entrée/sortie (E/S) selon la revendication 10, dans lequel ledit module de maintenance (116) comprend en outre un microprocesseur (308) couplé audit commutateur (302), ledit microprocesseur étant configuré pour déterminer une période de temps pendant laquelle ledit commutateur est actionné.

12. Scanner d'entrée/sortie (E/S) selon la revendication 11, dans lequel ledit module de maintenance (116) est configuré pour :
désactiver une communication entre ledit fond de panier (210) et ledit au moins un module E/S (118) en réponse à un actionnement dudit commutateur pendant une période de temps présélectionnée ; et
activer une communication entre ledit fond de panier (210) et ledit au moins un module E/S (118) en réponse à un actionnement dudit commutateur pendant une période de temps présélectionnée.

13. Scanner d'entrée/sortie (E/S) selon l'une quelconque des revendications 7 à 12, dans lequel ledit module de maintenance (116) comprend un dispositif d'éclairage (304) configuré pour indiquer si une communication entre ledit fond de panier (210) et ledit au moins un module E/S (118) est activée ou désactivée.

14. Scanner d'entrée/sortie (E/S) selon l'une quelconque des revendications 7 à 13, comprenant en outre une alimentation électrique, ledit module de maintenance (116) comprenant en outre au moins un circuit d'alimentation électrique couplé à ladite alimentation électrique et audit fond de panier (210), ledit au moins un circuit d'alimentation électrique étant configuré pour commander un flux de courant entre ladite alimentation électrique et ledit fond de panier lorsqu'une communication entre ledit fond de panier (210) et ledit au moins un module E/S (118) est activée.

15. Scanner d'entrée/sortie (E/S) à utiliser avec un réseau d'automate programmable industriel (PLC), ledit scanner E/S comprenant :
une alimentation électrique ;
un scanner d'entrée/sortie (114) selon l'une quelconque des revendications 7 à 14 ; et
au moins un circuit d'alimentation électrique couplé à ladite alimentation électrique et audit fond de panier (210), ledit au moins un circuit d'alimentation électrique étant configuré pour commander un flux de courant entre ladite alimentation électrique et ledit fond de panier (210) selon qu'une communication entre ledit fond de panier et ledit au moins un module E/S (118) soit activée ou désactivée.
